Europäisches Patentamt

**European Patent Office**

**Office européen des brevets**

(11) Numéro de publication: **0 094 265**
**B1**

(12) **FASCICULE DE BREVET EUROPEEN**

(45) Date de publication du fascicule du brevet:
**17.09.86**

(51) Int. Cl.⁴: **G 06 J 1/00, G 06 K 9/64**

(21) Numéro de dépôt: **83400723.9**

(22) Date de dépôt: **12.04.83**

(54) Corrélateur analogique-numérique à coefficients programmables de valeurs +1, -1 ou 0".

(30) Priorité: **20.04.82 FR 8206756**

(43) Date de publication de la demande:
**16.11.83 Bulletin 83/46**

(45) Mention de la délivrance du brevet:
**17.09.86 Bulletin 86/38**

(84) Etats contractants désignés:
**DE GB NL**

(56) Documents cités:
**IEEE TRANSACTIONS ON ELECTRON DEVICES, vol. ED-26, no. 4, avril 1979, pages 596-603, IEEE, New York, USA, D.A. GANDOLFO et al.: "Analog-binary CCD correlator: A VLSI signal processor"**
**IEEE JOURNAL OF SOLID-STATE CIRCUITS, vol. SC-17, no. 1, février 1982, pages 20-27, IEEE, New York, USA, R.S. MILLER et al.: "A merged pipe organ binary-analog correlator"**
**IEEE TRANSACTIONS ON ELECTRON DEVICES, vol. ED-26, no. 2, février 1979, pages 117-122, IEEE, New York, USA, E.P. HERRMANN et al.: "Programmable CCD correlator"**
**THE RADIO AND ELECTRONIC ENGINEER, vol. 50, no. 5, mai 1980, pages 213-225, INSTITUTION OF ELECTRONIC AND RADIO ENGINEERS, Londres, GB., J. MAVOR et al.: "A monolithic CCD programmable transversal filter for analogue signal processing"**

(73) Titulaire: **THOMSON-CSF, 173, Boulevard Haussmann, F-75379 Paris Cedex 08 (FR)**

(72) Inventeur: **Coutures, Jean-Louis, THOMSON-CSF SCPI 173, bld Haussmann, F-75379 Paris Cedex 08 (FR)**

(74) Mandataire: **Mayeux, Michèle, THOMSON-CSF SCPI 19, avenue de Messine, F-75008 Paris (FR)**

## Description

La présente invention concerne un corrélateur analogique-numérique à coefficients programmables de valeurs +1, –1 ou 0.

Les corrélateurs analogique-numérique à coefficients programmables de valeurs +1, –1 ou 0 trouvent de nombreuses applications, telles que le filtrage adapté, l'identification de processus, le traitement de signaux ... dans de nombreux domaines, tels que ceux du radar, du sonar, des communications ou du traitement de données.

Par l'article d'«IEEE Transactions on Electron Devices», vol. ED-26, numéro 4, avril 1979, pages 596–603, New York, intitulé «Analog-binary CCD Correlator. A VLSI signal processor», par Gandolfo, on connait un corrélateur analogique-numérique à coeffcients programmables de valeurs +1, –1 qui comporte un registre à décalages à transfert de charge, des moyens de multiplication par +1, et –1, des moyens de sommation.

Par l'article d'«IEEE Journal of Slid-State Circuits», vol. SC-17, numéro 1, février 1982, pages 20–27, New York, intitulé «A merged-pipe organ binary-analog correlator», par Miller et Berry on connait un corrélateur analogique-numérique à coefficients programmables de valeurs +1, –1 ou de valeurs +1, 0, dans lequel on utilise un potentiel fixe pour programmer un coefficient de corrélation à 0.

L'invention concerne un corrélateur analogique-numérique à coefficients programmables de valeurs +1, –1 ou 0 qui comporte:

– un registre à décalages à transfert de charge recevant des échantillons du signal analogique d'entrée à corréler;

– des moyens d'annulation du signal pris à la sortie de chaque étage du registre analogique et constitués par au moins un interrupteur électronique relié entre la sortie de chaque étage du registre analogique et un potentiel de référence, et qui bloque la lecture des charges par application du potentiel de référence à la sortie de l'étage;

– des moyens de multiplication par +1 ou –1 du signal de sortie de chaque étage du registre analogique qui n'a pas été annulé par les moyens d'annulation, ces moyens de multiplication par +1 ou –1 étant constitués de deux voies de lecture des charges en parallèle, comportant chacune au moins un interrupteur électronique;

– deux registres à décalages à sorties numériques programmables, de valeurs 0 ou 1, commandant l'un les moyens d'annulation et l'autre les moyens de multiplication le blocage de la lecture ou la lecture sur l'une des deux voies étant commandés par ces deux registres numériques connectés aux interrupteurs, par l'intermédiaire de mémoires et les interrupteurs des moyens de multiplication qui appartiennent aux deux voies étant commandés par des signaux complémentaires;

– des moyens de sommation algébrique des signaux de sortie des moyens de multiplication, et des moyens de lecture des charges de façon à obtenir un signal électrique de sortie du corrélateur ces moyens de sommation et de lecture comportant un amplificateur différentiel, l'une des voies de lecture étant reliée à l'entrée positive de l'amplificateur différentiel et l'autre à l'entrée négative de cet amplificateur.

Les objets, caractéristiques et résultats de l'invention ressortiront de la description suivante illustrée par les figures annexées qui représentent:

– les figures 1 et 2, deux schémas illustrant le principe du corrélateur selon l'invention;

– la figure 3, un mode de réalisation du corrélateur selon l'invention;

– les figures 4a, b, et c, des schémas expliquant le fonctionnement du corrélateur de la figure 3;

– la figure 5, une mémoire utilisée dans le corrélateur selon l'invention;

– les figures 6a, b et c, les signaux d'hologe appliqués à la mémoire de la figure 5;

– la figure 7, des courbes expliquant le fonctionnement de la mémoire de la figure 5.

Sur les différentes figures, les mêmes repères désignent les mêmes éléments, mais, pour des raisons de clarté, les cotes et proportions de divers éléments ne sont pas respectées.

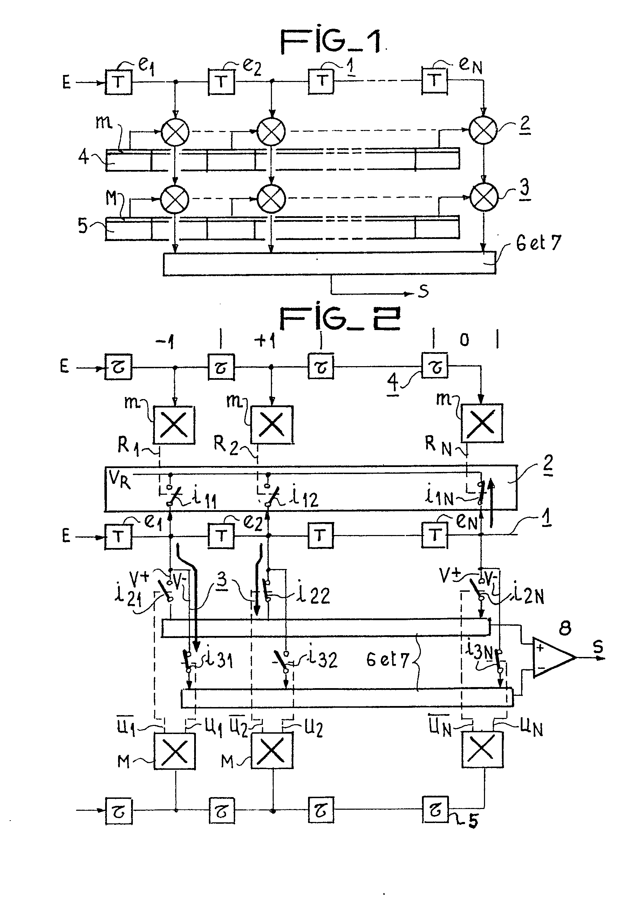

La figure 1 est un schéma illustrant le principe du corrélateur selon l'invention.

Ce corrélateur comporte un registre à décalages à transfert de charge 1 qui reçoit des échantillons du signal analogique d'entrée E à corréler. Chaque échantillon est transféré d'un étage du registre au suivant avec un retard T. Sur la figure, on a symbolisé les étages $e_1$ à $e_N$ du registre à décalages par des carrés portant la mention T.

A la sortie de chaque étage du registre analogique 1, sont reliés des moyens d'annulation 2 du signal de sortie de l'étage. Sur la figure, ces moyens sont représentés de façon symbolique par des cercles portant une croix. Ces moyens d'annulation 2 sont commandés par un registre à décalages 4 à sorties numériques programmables de valeurs 0 ou +1, par l'intermédiaire de moires m. Chaque sortie du registre 4 à sorties numériques passe dans une mémoire m et commande l'un des moyens d'annulation 2.

Selon l'information sous forme de 0 ou de 1 en provenance du registre 4 à sorties numériques, le signal de sortie E (t-kT) pris à la sortie de l'étage $e_k$ du registre 1 est multiplié par un coefficient $(h_a)$ k dont la valeur est 0 ou +1.

Sur la figure 1, on voit que les signaux issus des moyens d'annulation 2 entrent dans des moyens 3, qui sont également représentés de façon symbolique par des cercles portant une croix. Les moyens 3 multiplient par +1 ou par –1 le signal de sortie de chaque étage du registre analogique qui n'a pas été annulé par les moyens d'annulation 2.

Comme les moyens d'annulation, les moyens de multiplication par +1 ou –1 sont commandés par un registre à décalages 5 à sorties numériques programmables de valeurs 0 ou +1, par l'intermédiaire de mémoires M. Chaque sortie du registre 5 à sorties numériques passe dans une mémoire M et commande l'un des moyens 3 de multiplication par +1 ou –1.

Ainsi selon l'information en provenance du registre 5 à sorties numériques, le signal de sortie E (t-kT) de l'étage $e_k$ du registre, qui est déjà multiplié par le coefficient $(h_a)$ k, se trouve multiplié par un coefficient $(h_m)$k dont la valeur est +1 ou –1.

Les signaux de sortie des moyens de multiplication 3 entrent ensuite dans des moyens de sommation algébrique 6 et dans des moyens de lecture 7 des charges de façon à obtenir un signal électrique de sortie du corrélateur S.

Ce signal de sortie S s'écrit:

$$S = \sum_{k=0}^{N} (h_a)\, k \cdot (h_m)\, k \cdot E\,(t- kT),$$

où k désigne le rang de l'étage du coefficient.

On constate donc que l'invention permet bien de réaliser la corrélation entre un signal analogique d'entrée E échantillonné et des coefficients programmables de valeurs +1, –1 ou 0.

On peut modifier sans problème l'information sous forme de 0 ou de 1, envoyée à l'entrée des registres 4 et 5 à sorties numériques, et stockée dans les mémoires m et M. Il est donc possible pour un étage $e_k$ donné du registre analogique 1 de donner au coefficient $(h_a)$ k la valeur 0 ou la valeur 1, et de donner au coefficient $(h_m)$ k la valeur +1 ou la valeur –1. Le produit $(h_a)$ $k\cdot(h_m)$ k peut donc prendre les valeurs +1, –1 ou 0.

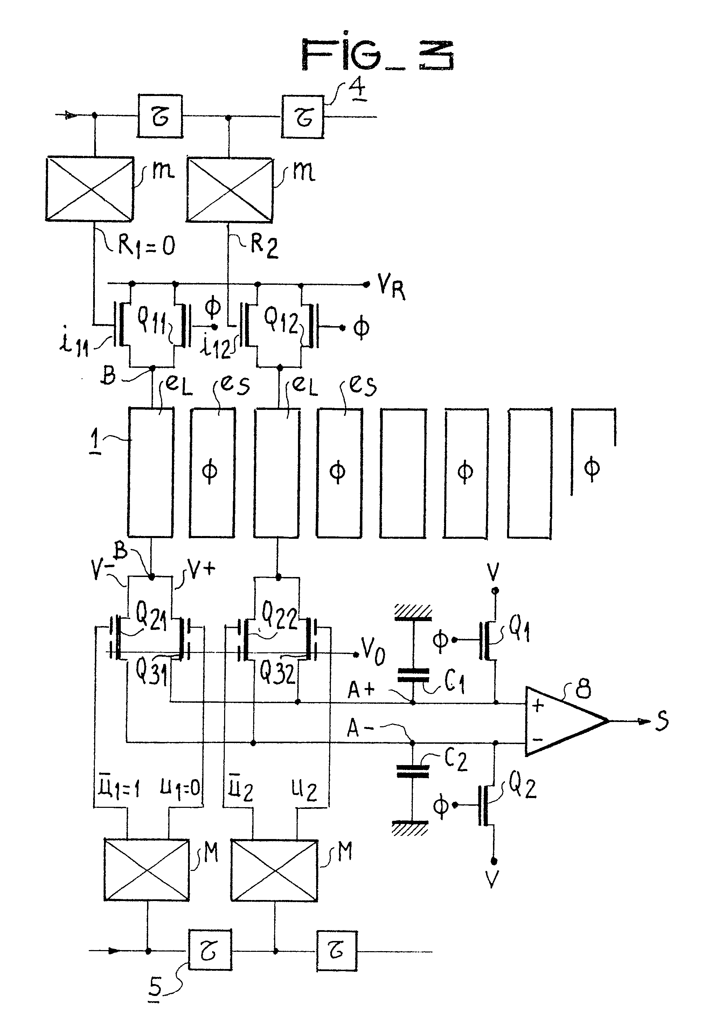

La figure 2 est un schéma illustrant de façon plus détaillée que le figure 1 le principe du corrélateur selon l'invention.

On retrouve au milieu de la figure 2 le registre analogique 1; en haut et en bas de la figure, sont représentés les registres à décalages 4 et 5 à sorties numériques. Sur cette figure, ces registres sont représentés par une suite de carrés symbolisant les étages et portant la mention σ, σ étant le temps nécessaire pour transférer l'information d'un étage au suivant.

Les moyens d'annulation 2 sont constitués par au moins un interrupteur électronique, $i_{11}$ à $i_{1N}$, qui est relié entre la sortie de chaque étage du registre analogique 1 et un potentiel de référence $V_R$. Ces interrupteurs sont commandés par les signaux $R_1$ à $R_N$ issus des mémoires m reliées à la sortie de chaque étage du registre 4 à sorties numériques.

Sur la figure, la commande des interrupteurs par les sorties des mémoires est symbolisée par des pointillés.

Selon l'information présente à la sortie des mémoires m, les interrupteurs $i_{11}$ à $i_{1N}$ sont ouverts ou fermés.

On a représenté à droite sur la figure 2, l'interrupteur $i_{1N}$ de l'étage $e_N$ à l'état fermé. La lecture des charges à la sortie de l'étage $e_N$ du registre 1 est bloquée à cause de l'application du potentiel de référence $V_R$ à la sortie de cet étage. Le coefficient $(h_a)$ N est égal à 0. Sur la figure 2, on a représenté par une flèche en trait épais le trajet des charges provenant de la sortie de l'étage $e_N$. Ces charges vont de la sortie due registre analogique $e_N$ vers le potentiel de référence. Sur l'étage $e_N$, la corrélation a lieu entre le signal de sortie de cet étage et le coefficient 0, comme cela est indiqué en haut de la figure 2.

Les moyens de multiplication par +1 ou –1 sont constitués de deux voies de lecture des charges en parallèle $V^+$ et $V^-$. Ces deux voies sont reliées à la sortie de chaque étage du registre 1. Chaque voie comporte au moins un interrupteur. On désigne ces interrupteurs par les références $i_{21}$ à $i_{2N}$ pour les interrupteurs des voies $V^+$ et par les références $i_{31}$ à $i_{3N}$ pour les interrupteurs de voies $V^-$. Chacun de ces interrupteurs est relié entre la sortie d'un étage du registre 1 et des moyens de sommation algébrique 6 et de lecture 7, symbolisés par des rectangles, qui sont reliés soit à l'entrée positive d'un amplificateur différentiel 8 si cet interrupteur fait partie d'une voie $V^+$, soit à l'entrée négative de l'amplificateur différentiel, si cet interrupteur fait partie d'une voie $V^-$.

Cet amplificateur différentiel peut être un amplificateur opérationnel ou un amplificateur différentiel à capacités commutées tel que celui décrit dans la demande de brevet No. 7 827 505, déposée le 26 Septembre 1978, au nom de THOMSON-CSF, et publiée sous le No. 2 437 734.

Les interrupteurs $i_{21}$ à $i_{2N}$ et $i_{31}$ à $i_{3N}$ sont commandés par des mémoires M reliées aux sorties des étages du registre 5.

On voit sur la figure 2 que les mémoires M possèdent deux sorties complémentaires $U_1$ et $U_1$, $U_2$ et $U_2$....$U_N$ et $U_N$.

Pour chaque mémoire, l'une des sorties commande l'interrupteur de la voie $V^+$ et l'autre celui de la voie $V^-$.

A gauche sur la figure 2, on a représenté l'interrupteur $i_{21}$ de l'étage $e_1$ à l'état ouvert et l'interrupteur $i_{31}$ du même étage à l'état fermé. Le coefficient $(h_m)$ 1 est égal à –1. L'interrupteur $i_{11}$ des moyens d'annulation étant ouvert, la lecture des charges prises à la sortie du premier étage $e_1$ est possible et le coeficient $(h_a)$ 1 est égal à 1. La flèche en trait épais de la figure 2 indique que les charges provenant de la sortie du premier étage $e_1$ traversent l'interrupteur $i_{31}$ pour arriver à l'entrée négative de l'amplificateur différentiel 8. Il y a corrélation du signal de sortie de l'étage $e_1$ avec un coefficient de valeur –1, comme cela est indiqué en haut de la figure 2.

On a représenté sur là figure 2 les interrupteurs $i_{12}$ et $i_{32}$ de l'étage $e_2$ à l'état ouvert et l'interrupteur $i_{22}$, qui est relié à l'entrée positive de l'amplificateur différentiel, à l'état fermé. Il y a donc corrélation entre le signal de sortie de l'étage $e_2$ et un coefficient +1.

Le corrélateur selon l'invention présente l'avantage de ne nécessiter que deux registres à sorties numériques pour élaborer trois sortes de coefficients +1, –1 et 0.

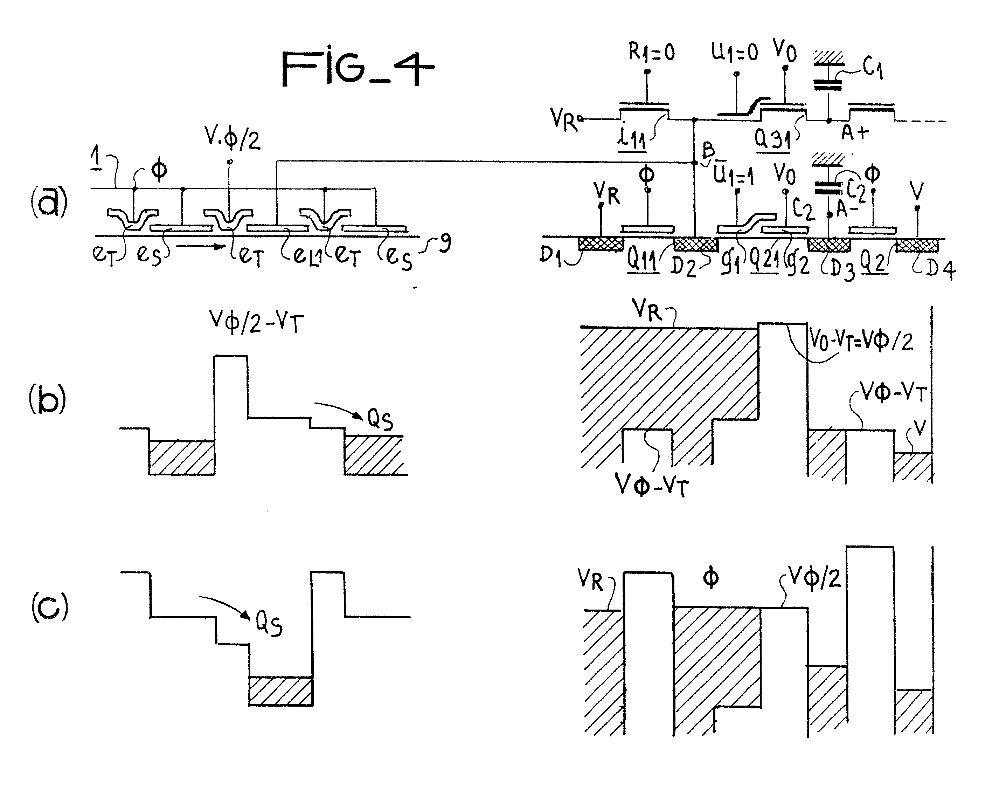

La figure 3 représente un mode de réalisation du corrélateur selon l'invention, et les figures 4a, b et c représentent des schémas expliquant le fonctionnement du corrélateur de la figure 3.

Dans ce mode de réalisation, le registre analogique 1 fonctionne en monophasé. Ce registre est représenté, vu en coupe logitudinale, selon le sens de transfert des charges indiqué par une flèche sur la figure 4a, côté gauche. Ce registre comporte des couples d'électrodes constituées d'une électrode de transfert $e_T$ et d'une électrode de stockage $e_S$. Chaque étage du registre comporte deux couples d'électrode. Un couple de l'étage reçoit un signal d'horloge $\varnothing$ qui varie périodiquement entre un niveau bas et un niveau haut $V_\varnothing$. Pour l'autre couple de l'étage, l'électrode de stockage est appelée électrode de lecture car elle est utilisée pour lire les charges quittant l'étage. Cette électrode de lecture est donc reliée aux moyens de lecture des charges, alors que l'électrode de transfert faisant partie du même couple est reliée à une tension de référence qui est souvent choisie égale à $V_\varnothing/2$.

Sur la figure 4a, les électrodes de transfert et de stockage sont coplanaires. Ce sont donc des implantations d'impuretés, dans le substrat semi-conducteur 9 qui assurent un transfert unidirectionnel des charges. Ce transfert unidirectionnel pourrait également être obtenu en utilisant des surépaisseurs d'oxyde.

Sur la figure 3, le registre analogique 1 est représenté vu de dessus. Pour des raisons de clarté, les électrodes de transfert ne sont pas représentées, mais seules sont représentées, les électrodes de stockage $e_S$ recevant le signal d'horloge $\varnothing$, qui portent l'indication $\varnothing$, et les électrodes de lecture $e_L$.

Les figures 4b et c sont des diagrammes représentant l'évolution des potentiels de canal dans le substrat semi-conducteur 9. Les zones hachurées indiquent la présence de porteurs minoritaires.

Sur la figure 4b, côté gauche, on voit que lorsque le signal d'horloge $\varnothing$ est au niveau haut, les quantités de charges à lire $Q_S$ sont sous les électrodes de stockage, alors que sur la figure 4c, côté gauche, on voit que lorsque le signal d'horloge $\varnothing$ passe au niveau bas, une quantité de charges $Q_S$ arrive sous l'électrode de lecture $e_{L1}$. Le potentiel de canal sous le couple d'électrodes reliées à $V_\varnothing/2$ et aux moyens de lecture ne bouge pratiquement pas lorsque $\varnothing$ passe du niveau haut au niveau bas, et vice-versa.

Sur la figure 3, on retrouve les registres 4 et 5 à sorties numériques et les mémoires m et M. Les électrodes de lecture $e_L$ du registre analogique 1 sont reliées à quatre transistors MOS:

– des transistors MOS $i_{11}$ à $i_{1N}$ qui constituent les interrupteurs électroniques des moyens d'annulation. Ces transistors sont reliés par leur drain et leur source entre une électrode de lecture et le potentiel de référence $V_R$. Leur grille est commandée par les signaux de sortie $R_1$ à RN des mémoires m. Dans toute la description on choisit le type des transistors MOS – à déplétion ou à enrichissement – et leur polarisation pour que, par exemple, lorsque le signal de sortie des mémoires est au niveau logique 1, les transistors soient passants et pour qu'ils soient bloqués inversement lorsque le signal sortie est au niveau logique 0;

– des transistors MOS $Q_{11}$ à $Q_{1N}$, connectés par leur drain et leur source, entre une électrode de lecture et le potentiel de référence $V_R$. Ces transistors sont commandés par le signal d'horloge $\varnothing$ appliqué sur leur grille. Ils font partie des moyens de lecture;

– des transistors $Q_{21}$ à $Q_{2N}$ sur les voies $V^+$ et des transistors $Q_{31}$ à $Q_{3N}$ sur les voies $V^-$. Ces transistors constituent les interrupteurs $i_{21}$ à $i_{2N}$ et $i_{31}$ à $i_{3N}$ des moyens de multiplication. Ils sont reliés par leur drain et leur source entre une électrode de lecture et soit l'entrée positive, soit l'entrée négative de l'amplificateur différentiel 8, commun à tout le corrélateur. L'une des grilles de ces transistors est commandée par les signaux issus des mémoires M. Dans le mode de réalisation de la figure 3, les transistors $Q_{21}$ à $Q_{2N}$ et $Q_{31}$ à $Q_{3N}$ sont des transistors MOS double grille. A la place d'un transistor MOS double grille, on peut utiliser deux transistors MOS en série, l'un faisant partie des moyens de multiplication et commandé par les sorties des mémoires M et l'autre faisant partie des moyens de lecture et commandé par un potentiel de référence $V_0$. Dans le mode de réalisation de la figure 3, c'est la deuxième grille des transistors $Q_{21}$ à $Q_{2N}$ et $Q_{31}$ à $Q_{2N}$ qui reçoit le potentiel de référence $V_0$.

On voit sur la figure 3 que l'entrée positive – point $A^+$ et l'entrée négative – point $A^-$, de l'amplificateur différentiel sont reliées à des capacités $C_1$ et $C_2$, également connectées à la masse, et à des transistors MOS $Q_1$ et $Q_2$ qui sont connectés par leur drain et leur source entre les points $A^+$ et $A^-$ et un potentiel de référence V. Ces transistors reçoivent sur leur grille le signal d'horloge $\varnothing$. Les capacités $C_1$ et $C_2$ et les transistors $Q_1$ et $Q_2$ font partie des moyens de lecture du corrélateur. Il serait bien entendu possible d'utiliser un autre circuit de commande remplissant la même fonction que ces transistors $Q_1$ et $Q_2$.

On va maintenant expliquer le fonctionnement du corrélateur de la figure 3 en utilisant notamment les figures 4b et c, côté droit, qui montrent l'évolution des potentiels de surface dans le substrat semi-conducteur des transistors $Q_{11}$, $Q_{21}$ et $Q_2$.

L'électrode de lecture $e_{L1}$ de l'étage $e_1$, prise comme exemple, est reliée en un point B aux transistors $Q_{11}$, $Q_{21}$, $i_{11}$ et $Q_{31}$. Seuls les transistors $Q_{11}$ et $Q_{21}$ sont représentés vus en coupe longitudinale sur la figure 4a.

La figure 4b représente les potentiels de surface dans le substrat à un instant où le signal d'horloge $\varnothing$ est au niveau haut.

On voit sur la figure 4b – côté gauche – que les quantités de charges signal $Q_S$ se trouvent sous les électrodes de stockage reliées à $\varnothing$.

On voit sur la figure 4b – côté droit – que la diode $D_1$ du transistor $Q_{11}$ qui est reliée à $V_R$ impose le potentiel $V_R$ sous la grille du transistor $Q_{11}$ et sous la diode $D_2$ reliée au point B et commune aux transistors $Q_{11}$, $Q_{21}$, $i_{11}$ et $Q_{31}$. Ce potentiel est éga-

lement imposé sous l'une des grilles $G_1$ du transistor $Q_{21}$ qui est relié à la sortie $\bar{U}_1$ d'une mémoire M. Cette sortie est à l'état 1, et un niveau haut est imposé à la grille de $Q_{21}$. Le transistor $Q_{31}$ dont l'une des grilles est commandée par la sortie $U_1$ à l'état 0 est bloqué. De même, le transistor $i_{11}$ est commandé par la sortie $R_1$ à l'état 0 d'une mémoire m, et se trouve aussi bloqué.

L'autre grille $G_2$ du transistor MOS double grille $Q_{21}$ reçoit le potentiel de référence $V_0$. Le potentiel de canal sous cette grille égale: $V_0 - V_T$, où $V_T$ est la tension de seuil du transistor $Q_{21}$. On doit avoir: $V_0 - V_T$ très légèrement inférieur à $V_R$ pour que le point B soit isolé de la partie droite du dispositif de lecture alors que le signal d'horloge $\emptyset$ est au niveau haut.

On peut choisir le potentiel de référence $V_0$ pour avoir:

$$V_0 - V_T = V_\emptyset/2.$$

Ainsi, le potentiel appliqué sur les deux électrodes du couple électrode de transfert-électrode de lecture est sensiblement le même.

Le signal d'horloge $\emptyset$ est appliqué à la grille de $Q_2$ qui reçoit sur sa diode $D_4$ le potentiel V, alors que sa diode $D_3$ est reliée au point A- à la capacité $C_2$. Sur la figure 4, on a choisi V $V_\emptyset - V_T$, ainsi le transistor $Q_2$ est en saturation. La capacité $C_2$ se trouve chargée à la valeur: $C_2 \cdot (V_\emptyset - V_T)$. Il serait également possible de faire fonctionner ce transistor $Q_2$ en triode.

Le potentiel $V_\emptyset - V_T$ de la diode $D_3$ est bien supérieur au potentiel $v_\emptyset/2$ des grilles $G_1$ et $G_2$ de $Q_{21}$ et de la diode $D_2$. Le transistor $Q_{21}$ se trouve polarisé en saturation.

La figure 4c représente les potentiels de canal dans le substrat à un instant où le signal d'horloge $\emptyset$ est au niveau bas.

On voit sur la figure 4c – côté gauche – que la quantité de charges à lire $Q_S$ arrive sous l'électrode de lecture $e_{L1}$.

La grille de $Q_{11}$ reçoit le signal $\emptyset$ au niveau bas et vient isoler la diode $D_1$ reliée à $V_R$ du reste des moyens de lecture. Le transistor $Q_{21}$ est toujours polarisé en saturation. La quantité de charges $Q_S$ qui arrive sous l'électrode de lecture $e_{L1}$ de la figure 4c – partie gauche – provoque au point B une diminution du potentiel de surface. Le potentiel du point B est aussitôt rétabli à $V_\emptyset/2 = V_0 - V_T$ par la grille $G_2$. Une quantité de charges $Q_S$ est transmise au point A- et vient décharger la capacité $C_2$, car le passage de $\emptyset$ au niveau bas a bloqué le transistor $Q_2$.

L'entrée négative de l'amplificateur différentiel est reliée à la capacité $C_2$ dont la charge a été modifiée par l'arrivée de la quantité de charges $Q_S$ sous l'électrode de lecture $e_{L1}$. Ainsi est réalisée la lecture des charges arrivant sous l'électrode de lecture $e_{L1}$, et dans l'exemple choisi, la corrélation par le coefficient $-1$.

Il faut que lorsque la quantité de charges $Q_S$ arrive au point B le transistor $Q_{11}$ soit déjà bloqué. Le transfert des charges vers l'électrode $e_{L1}$ a lieu seulement lorsque $\emptyset$ a diminué jusqu'à la valeur

$V_\emptyset/2$. Or le transistor $Q_{11}$ se bloque pour $\emptyset - V_T = V_\emptyset/2$ et $\emptyset = V_\emptyset/2 + V_T$, où $V_T$ est la tension de seuil du transistor $Q_{11}$. On constate donc que le transistor $Q_{11}$ se bloque pour $\emptyset = V_\emptyset/2 + V_T$ et çe n'est que lorsque $\emptyset$ égale $V_\emptyset/2$ que les charges arrivent sous l'électrode $e_{L1}$.

D'une façon plus générale, il faut choisir notamment les diverses tensions de référence, la tension de seuil de transistors $Q_{11}$ et l'amplitude du signal d'horloge $\emptyset$ pour que $Q_S$ arrive au point B alors que le transistor $Q_{11}$ est bloqué.

Si l'on conserve l'exemple de l'électrode de lecture $e_{L1}$, on voit que pour qu'il y ait corrélation par le coefficient $+1$, il suffit d'avoir $\bar{U}_1 = 0$ et $U_1 = 1$ en sortie de la memoire M, en conservant $R_1 = 0$ en sortie de la mémoire m. Dans ce cas, $Q_{21}$ est bloqué et la quantité de charges $Q_S$ passe par le transistor $Q_{31}$ relié à l'entrée positive de l'amplificateur différentiel.

Pour que la corrélation ait lieu avec le coefficient 0, il suffit d'avoir $R_1 = 1$ en sortie de la mémoire m. Dans ce cas, le transistor $i_{11}$ est conducteur, que $\emptyset$ soit à l'état haut ou à l'état bas. Le potentiel $V_R$, auquel est relié $i_{11}$, est imposé en permanence au point B; la lecture des charges est alors bloquée. Lors de l'arrivée de la quantité de charges $Q_S$ sous l'électrode $e_{L1}$, il n'y a plus de variation de potentiel au point B, dont le potentiel est fixe. Il n'y a donc pas de lecture de la quantité de charges $Q_S$. La charge des capacités $C_1$ et $C_2$ ne varie pas. Il y a corrélation par un coefficient nul.

Il est bien entendu que le corrélateur selon l'invention peut également comporter un registre analogique 1 fonctionnant, non plus en monophasé, mais en biphasé ou en triphasé, par exemple.

Le fonctionnement en monophasé présente l'avantage de réduire le nombre de signaux d'horloge et permet de fonctionner à des fréquences élevées.

Le registre 1 peut fonctionner en biphasé avec deux signaux d'horloge $\emptyset_1$ et $\emptyset_2$ en opposition de phase avec recouvrement au niveau haut. Le signal $\emptyset_1$ est appliqué aux couples électrode de transfert-électrode de stockage et le signal $\emptyset_2$ aux électrodes de transfert faisant partie du couple électrode de transfert-électrode de lecture. On applique alors sur la grille $G_2$ de $Q_{21}$ un signal d'horloge $\emptyset_3$ qui est en retard de phase par rapport à $\emptyset_1$. La diode $D_1$ de $Q_{11}$ est reliée à la masse et la grille de $Q_{11}$ reçoit un signal d'horloge $\emptyset_{RAZ}$ qui est au niveau haut entre l'instant où $\emptyset_2$ passe sur niveau bas et l'instant où $\emptyset_3$ passe au niveau haut.

Les registres à sorties numériques 4 et 5 peuvent être constitués de transistors MOS. Ils peuvent aussi être constitués de registres à transfert de charge dans lesquels l'absence de charges représente une 0 et la présence de charges représente un 1, par exemple. Dans ce cas, les mémoires m et M peuvent être constitués par un dispositif à transfert de charge, comme cela est décrit dans la demande de brevet No. 7 826 552, du 15 Septembre 1978 au nom de THOMSON-CSF, pu-

bliée sous le No. 2 437 734. Dans le cas des mémoires M, pour disposer de sorties complémentaires, on utilise un inverseur, qui peut aussi être constitué par un dispositif à transfert de charge.

La figure 5 représente le schéma d'une mémoire qui pourrait être utilisée dans le corrélateur selon l'invention. Cette mémoire présente l'avantage d'avoir deux sorties complémentaires U et Ū.

Cette mémoire comporte deux inverseurs en série. Chaque inverseur est constituée par deux transistors MOS en série qui sont reliés à deux tensions de référence $V_{DD}$ et $V_{SS}$. Les TMOS $T_1$ et $T_3$ reliés à $V_{DD}$ sont des TMOS à déplétion dont la grille est également reliée à $U_{DD}$. Les TMOS $T_2$ et $T_4$ reliés à $V_{SS}$ sont des TMOS à enrichissement. L'entrée D du premier inverseur se fait sur la grille de $T_2$ et sa sortie U au point commun à $T_1$ et $T_2$. Cette sortie est reliée à la grille de $T_4$ et la sortie Ū des deux inverseurs en série se fait au point commun à $T_3$ et $T_4$.

Un TMOS à enrichissement $T_5$ est relié par son drain et sa source entre l'entrée D et la sortie U des deux inverseurs en série. Sa grille est commandée par un signal d'horloge $\varnothing_L$.

Au point D sont également reliés:

– une capacité $C_D$ entre le point D et la masse;
– un transistor MOS à enrichissement $T_6$ qui est également relié à un potentiel de référence $V_I$, et dont la grille est commandée par un signal d'horloge $\varnothing_1$;
– une grille G reliée à la sortie d'un étage de l'un des registres 4 ou 5 et commandée par un signal d'horloge $\varnothing_p$. Cette grille est représentée symboliquement par un interrupteur.

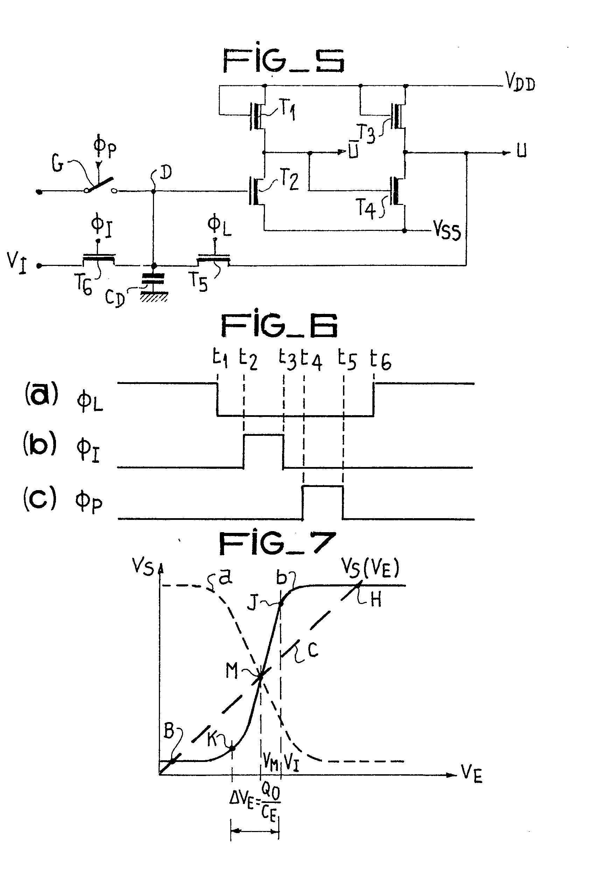

Sur la figure 7, on a représenté en trait discontinu la courbe de réponse a, donnant la tension de sortie en fonction de la tension d'entrée, pour chaque inverseur. On a aussi représenté, en trait continu, la courbe de réponse b des deux inverseurs en série et en traits pointillés plus espacés la bissectrice c pour laquelle $V_S = V_E$. Les courbes a et b présentent chacune deux états stables séparés par une zone de transition.

Pour obtenir un fonctionnement correct, il faut que la courbe b présente un gain supérieur à 1 dans la zone de transition, c'est-à-dire qu'elle coupe la bissectrice c en trois points. L'un de ces points M est situé dans la zone de transition, et les deux autres B et H, sont situés sur les états stables, respectivement de niveau bas et de niveau haut.

Cette condition peut encore s'exprimer de la façon suivante. Si l'on désigne par $L_1$, la longeur du canal des TMOS, $T_2$ et $T_4$ (c'est-à-dire la distance séparant les deux diffusions constituant le drain et la source de ces transistors), par $L_2$ et $W_2$ respectivement la longeur et la largeur du canal des transistors $T_1$ et $T_3$, par $B_1$, le rapport $W_1/L_1$ et par $B_2$, le rapport $W_2/L_2$, il faut que $B_1$ soit très supérieur à $B_2$.

La bissectrice c délimite deux zones sur la courbe b une première zone où $V_S$ est supérieur à $V_E$, c'est-à-dire où $(V_S/V_E) - 1$ est positif, et une seconde zone où $V_S$ est inférieur à $V_E$, c'est-à-dire où $(V_S/V_E) - 1$ est négatif.

On va maintenant expliquer le fonctionnement de cette mémoire en utilisant les figures 6a, b et c qui représentent les signaux d'horloge $\varnothing_L$, $\varnothing_1$ et $\varnothing_p$.

Ces signaux d'horloge n'interviennent que pour mémoriser de nouvelles données numériques. Après l'instant $t_6$, $\varnothing_L$ est au niveau haut, $\varnothing_1$ et $\varnothing_p$ sont au niveau bas. On a fait intervenir six instants successifs, $t_1$ à $t_6$. De $t_1$ à $t_6$, $\varnothing_L$ est au niveau bas. Alors que $\varnothing_1$ est au niveau haut de $t_2$ à $t_3$ et $\varnothing_p$, de $t_4$ à $t_5$.

A l'instant $t_1$, le passage de $\varnothing_L$ au niveau bas bloque le TMOS $T_5$. L'entrée D est déconnectée de la sortie U.

Au temps $t_2$ le passage de $\varnothing_1$ au niveau haut rend $T_6$ conducteur et provoque la charge de la capacité $C_D$ au potentiel $V_I$.

Le potentiel $V_I$ doit être tel que le point de fonctionnement sur la courbe b soit dans la zone où $V_S > V_E$ ou dans la zone où $V_S < V_E$ suivant que les charges détecter sont des électrons ou des trous.

Sur la figure 7, on a représenté le cas où les charges à détecter sont des électrons. On a appelé J le point de fonctionnement situé dans la zone de la courbe b où $V_S > V_E$, c'est-à-dire dans celle qui est au-dessus de la courbe c.

Au temps $t_3$, $\varnothing_1$ passe au niveau bas et le potentiel de la capacité $C_D$ devient flottant.

Au temps $t_4$, $\varnothing_p$ passe au niveau haut. La charge est introduite à l'entrée des mémoires m ou M.

Si cet étage contient une quantité de charges $Q_0$, la charge de la capacité $C_D$ diminue du fait de l'arrivée de cette quantité de charges au point D.

Le point de fonctionnement sur la coube b passe de J en K où $V_S < V_E$.

Si cet étage ne contient pas de quantité de charges, la charge de $C_D$ ne varie pas et le point de fonctionnement reste en J.

Au temps $t_5$, $\varnothing_p$ passe au niveau bas.

Au temps $t_6$, $\varnothing_L$ passe au niveau haut. Le transistor $T_5$ conduit et relie l'entrée D à la sortie U.

Comme la sortie U et l'entrée D sont respectivement à basse et haute impédance, la sortie U impose son potentiel à l'entrée D.

Ainsi, si le point de fonctionnement est en K où $V_S < V_E$, $V_E$ a tendance à diminuer après l'instant $t_6$. Le point de fonctionnement se déplace et se stabilise au point B, puisque le point de fonctionnement se situe alors nécessairement sur la bissectrice c.

Si le point de fonctionnement est en J où $V_S > V_E$, $V_E$ a tendance à augmenter et le point de fonctionnement passe en H.

Selon que l'étage du registre 4 ou 5 de la figure 2 contient ou non une quantité de charges $Q_0$, la mémoire délivre à la sortie U deux tensions d'amplitude très différentes, correspondant à un état 0 ou à un état 1.

Le résultat complémentaire est disponible sur la sortie Ū.

La capacité $C_D$ peut être seulement constituée pas les capacités parasites de diffusion drain et source des transistors $T_5$ et $T_6$ reliés au point D.

## Revendications

1. Corrélateur analogique-numérique à coefficients programmables de valeurs +1, -1 ou 0, caractérisé en ce qu'il comporte:

- un registre à décalages à transfert de charge (1) recevant des échantillons du signal analogique d'entrée (E) à corréler;

- des moyens d'annulation (2) du signal pris à la sortie de chaque étage du registre analogique (1) et constitués par au moins un interrupteur électronique ($i_{11}$ à $i_{1N}$) relié entre la sortie de chaque étage du registre analogique (1) et un potentiel de référence ($V_R$) et qui bloque la lecture des charges par application du potentiel de référence à la sortie de l'étage;

- des moyens de multiplication (3) par +1 ou -1 du signal de sortie de chaque étage du registre analogique (1) qui n'a pas été annulé par les moyens d'annulation (2), ces moyens de multiplication par +1 ou -1 (3) étant constitués de deux voies de lecture des charges en parallèle ($V^+$, $V^-$), comportant chacune au moins un interrupteur électronique ($i_{21}$ à $i_{2N}$ et $i_{31}$ à $i_{3N}$);

- deux registres à décalages (4, 5) à sorties numériques programmables, de valeurs 0 ou 1, commandant l'un (4) les moyens d'annulation (2) et l'autre (5) les moyens de multiplication (3), le blocage de la lecture ou la lecture sur l'une des deux voies étant commandés par ces deux registres numériques (4, 5) connectés aux interrupteurs, par l'intermédiaire de mémoires (m et M) et les interrupteurs des moyens de multiplication (3) qui appartiennent aux deux voies ($V^+$ et $V^-$) étant commandés par des signaux complémentaires;

- des moyens (6) de sommation algébrique des signaux de sortie des moyens de multiplication, et des moyens de lecture (7) des charges de façon à obtenir un signal électrique de sortie du corrélateur (S) ces moyens de sommation et de lecture comportant un amplificateur différentiel (8), l'une des voies de lecture ($V^+$) étant reliée à l'entrée positive de l'amplificateur différentiel (8) et l'autre ($V^-$) à l'entrée négative de cet amplificateur (8).

2. Corrélateur selon la revendication 1, caractérisé en ce que les moyens de lecture sont constitués par:

- un premier groupe de transistors MOS ($Q_{21}$ à $Q_{2N}$ et $Q_{31}$ à $Q_{3N}$) reliés, sur chaque voie de lecture ($V^+$, $V^-$) d'une part, à l'électrode de lecture de chaque étage du registe analogique (1) et d'autre part, à l'une des entrées de l'amplificateur différentiel (8);

- une capacité ($C_1$, $C_2$) reliée entre chaque entrée de l'amplificateur différentiel (8) et la masse;

- un circuit de commande ($Q_1$, $Q_2$), reliée à chacune des entrées de l'amplificateur différentiel (8) qui assure la charge de la capacité ($C_1$, $C_2$) et la mise à l'état saturé des transistors MOS du premier groupe, avant l'arrivée des charges à lire sous les électrodes de lecture ($e_L$), le potentiel de la capacité étant laissé flottant lors de l'arrivée des charges;

- un second groupe de transistors MOS ($Q_{11}$ à $Q_{1N}$) reliés entre l'électrode de lecture de chaque étage du registre analogique (1) et un potentiel de référence ($V_R$), ces transistors bloquant la lecture pendant les intervalles où les quantités de charges à lire ($Q_S$) ne se trouvent pas sous les électrodes de lecture ($e_{LI}$).

3. Corrélateur selon la revendication 2, caractérisé en ce que les moyens d'annulation sont constitués par un troisième groupe de transistors MOS reliés par leur drain et leur source entre l'électrode de lecture ($i_{11}$ à $i_{1N}$) de chaque étage du registre à décalages à transfert de charge et le potentiel de référence ($V_R$), ces transistors étant commandés par les signaux issus des mémoires (m) reliées à l'un des registres à sorties numériques (4).

4. Corrélateur selon l'une des revendications 2 ou 3, caractérisé en ce que les moyens de multiplication par +1 ou -1 (3) sont, constitués d'un quatrième groupe de transistors MOS en série par leur drain et leur source avec les transistors MOS du premier groupe et dont les grilles sont commandées par les signaux ($U_1$, $U_1$, $U_2$, $U_2$...) issus des mémoires (M) reliées à l'un des registres à sorties numériques (5).

5. Corrélateur selon la revendication 4, caractérisé en ce que des transistors MOS à double grille ($Q_{21}$ à $Q_{2N}$ et $Q_{31}$ à $Q_{3N}$) remplacent chaque transistor MOS du premier groupe en série avec un transistor MOS du quatrième group.

6. Corrélateur selon l'une des revendications 2 à 5, caractérisé en ce que:

- le registre à transfert de charges qui reçoit le signal d'entrée fonctionne en monophasé, c'est-à-dire qu'il comporte des couples constitués d'une électrode de transfert ($e_T$) et d'une électrode de stockage ($e_S$), un couple sur deux recevant un signal d'horloge ($\varnothing$), alors que dans les couples intermédiaires l'électrode de stockage dite électrode de lecture ($e_L$) est reliée au moyens de lecture et l'électrode de transfert ($e_T$) est reliée à une première tension de référence ($V_\varnothing/2$);

- les transistors MOS du second groupe ($Q_{11}$ à $Q_{1N}$) reçoivent sur leurs grilles ledit signal d'horloge ($\varnothing$);

- les transistors MOS du premier groupe ($Q_{21}$ à $Q_{2N}$ et $Q_{31}$ à $Q_{3N}$) reçoivent sur leurs grilles une seconde tension de référence ($V_0$), et les tensions de référence ($V_R$, $V_\varnothing/2$), l'amplitude du signal d'horloge ($V_\varnothing$) et la tension de seuil ($V_T$) des transistors MOS du premier groupe étant choisis pour que les transistors du second groupe soient bloqués avant l'arrivé des charges ou les électrodes de lecture ($e_{L1}$).

7. Corrélateur selon l'une des revendications 1 à 6, caractérisé en ce que les registres à sorties numériques programmables (4, 5) sont des registres à transfert de charge.

8. Corrélateur selon l'une des revendications 1 à 6, caractérisé en ce que les registres à sorties numériques programmables (4 et 5) sont constitués de transistors MOS.

9. Corrélateur selon l'une des revendications 1 à 8, caractérisé en ce que chaque mémoire (m, M) reliée à l'une des sorties d'un registre à décalages à sorties numériques programmables comporte:

- une capacité $(C_D)$;
- un premier et un deuxième inverseurs en série, l'entrée (D) du premier inverseur étant reliée à l'une des bornes de la capacité $(C_D)$ dont l'autre borne est reliée à la masse, la sortie du premier et du deuxième inverseur (U et U) constituant deux sorties complémentaires de la mémoire, l'entrée (D) du premier inverseur étant haute impédance et la sortie (U) du deuxième inverseur étant basse impédance, la sortie du deuxième inverseur pouvant prendre deux états stables et la courbe de réponse (b) de ces deux inverseurs en série présentant un gain supérieur à 1 dans la zone de transition entre les deux états stables;
- un transistor MOS $(T_6)$ relié par son drain et sa source entre une tension de référence $(V_I)$ et la capacité $(C_D)$, et recevant sur sa grille un signal d'horloge $(\varnothing_I)$ qui rend ce transistor passant pendant un premier temps de manière à avoir un point de fonctionnement (J) situé dans une première zone de la courbe de réponse $V_S$ $(V_E)$ des deux inverseurs où $V_S/V_E - 1$ a un premier signe et qui bloque ce transistor en dehors de ce premier temps;
- des moyens $(G, \varnothing_p)$ pour pendant un deuxième temps, appliquer sur l'entrée (D) des deux inverseurs une sortie d'un registre à décalages à sorties numériques programmables (4, 5) pour selon que cette sortie est à 0 ou 1 amener le point de fonctionnement dans une deuxième zone de la courbe de réponse $V_S$ $(V_E)$ (b) des deux inverseurs (K) ou à le maintenir dans la première zone (J);
- un transistor MOS $(T_5)$ relié par son drain et sa source entre l'entrée (D) et la sortie (U) des deux inverseurs en série et recevant sur sa grille $(\varnothing_L)$ un signal de commande qui le rend passant pendant un troisième temps, la sortie des deux inverseurs se situant sur l'état stable de la courbe de réponse $V_S$ $(V_E)$ correspondant à la deuxième (B) ou à la première (H) zone selon que la sortie du registre est à 0 ou à 1.

10. Corrélateur selon la revendication 9, caractérisé en ce que la capacité $(C_D)$ est constitué par la capacité parasite des diffusions drain et source des deux transistors MOS $T_5$ et $T_6$.

11. Corrélateur selon l'une des revendications 9 ou 10, caractérisé en ce que la sortie et la sortie complémentaire (U, U) de chaque mémoire (M) commandent les grilles de deux transistors MOS du quatrième groupe $(Q_{21}$ et $Q_{31})$ faisant partie des moyens de multiplications par +1 ou –1, et situés sur deux voies de lecture en parallèle de la même électrode de lecture.

**Patentansprüche**

1. Analog/Digital-Korrelator mit programmierbaren Koeffizienten der Werte +1, –1 oder 0, dadurch gekennzeichnet, dass er umfasst

- ein Ladungsübertragungs-Schieberegister (1), welches Abtastproben eines zu korrelierenden analogen Eingangssignals (E) empfängt;
- Mittel (2) zum Unterdrücken des am Ausgang jeder Stufe des Analogregisters (1) abgenommenen Signals und gebildet durch wenigstens einen elektronischen Unterbrecher $(i_{11}$ bis $i_{1N})$, der zwischen den Ausgang jeder Stufe des Analogregisters (1) und ein Bezugspotential $(V_R)$ angeschlossen ist und der das Lesen der Ladungen durch ein Anlegen des Bezugspotentials an den Ausgang der Stufe sperrt;
- Mittel zum Multiplizieren (3) des Ausgangssignals jeder Stufe des Analogregisters (1), das nicht durch die Unterdrückungsmittel (2) unterdrückt wurde, mit +1 oder –1, wobei die Mittel zum Multiplizieren mit 1 oder –1 (3) zwei parallele Ladungslesepfade $(V^+, V^-)$ enthalten, von denen jeder mindestens einen elektronischen Unterbrecher $(i_{21}$ bis $i_{2N}$ und $i_{31}$ bis $i_{3N})$ umfasst;
- zwei Schieberegister (4, 5) mit programmierbaren Digitalausgängen vom Wert 0 oder 1, von denen das eine (4) die Unterdrückungsmittel (2) und das andere (5) die Multipliziermittel (3) steuert, wobei das Sperren des Lesens oder das Lesen auf einem der beiden Pfade durch die beiden digitalen Register (4, 5) gesteuert wird, die über dazwischenliegende Speicher (m und M) an Unterbrecher angeschlossen sind, und wobei die Unterbrecher der Multipliziermittel (3), die zu den beiden Pfaden $(V^+$ und $V^-)$ gehören, durch komplementäre Signale gesteuert werden;
- Mittel (6) zum algebraischen Summieren der Ausgangssignale der Multipliziermittel und Mittel zum Lesen (7) der Ladungen, um ein elektrisches Signal am Korrelatorausgang (S) zu gewinnen, wobei die Summiermittel und die Lesemittel einen Differentialverstärker (8) umfassen und einer der Lesepfade $(V^+)$ am positiven Eingang des Differentialverstärkers (8) und der andere $(V^-)$ am negativen Eingang dieses Verstärkers (8) liegt.

2. Korrelator nach Anspruch 1, dadurch gekennzeichnet, dass die Lesemittel gebildet sind durch

- eine erste Gruppe von MOS-Transistoren $(Q_{21}$ bis $Q_{2N}$ und $Q_{31}$ bis $Q_{3N})$, die auf jedem Lesepfad $(V^+, V^-)$ einerseits an die Leseelektrode jeder Stufe des Analogregisters (1) und andererseits an einen der Eingänge des Differentialverstärkers (8) angeschlossen sind;
- einen Kondensator $(C_1, C_2)$, der zwischen jedem Eingang des Differentialverstärkers (8) und Masse liegt;
- einen Steuerkreis $(Q_1, Q_2)$, angeschlossen an jeden Eingang des Differentialverstärkers (8), der die Aufladung des Kondensators $(C_1, C_2)$ und die Sättigung der MOS-Transistoren der ersten Gruppe vor dem Eintreffen der zu lesenden Ladungen auf den Leseelektroden $(e_L)$ garantiert, wobei das Potential des Kondensators zum Zeitpunkt des Eintreffens der Ladungen driftend gelassen wird;
- eine zweite Gruppe von MOS-Transistoren $(Q_{11}$ bis $Q_{1N})$, angeschlossen zwischen der Leseelektrode jeder Stufe des Analogregisters (1) und einem Bezugspotential $(V_R)$, wobei die Transistoren das Lesen während der Intervalle, in denen die zu lesenden Ladungsmengen ($Q_S$) sich nicht auf den Leseelektroden ($e_{L1}$) befinden, sperren.

3. Korrelator nach Anspruch 2, dadurch gekennzeichnet, dass die Unterdrückungsmittel durch eine dritte Gruppe von MOS-Transistoren dargestellt werden, die mit ihrem Drain-Anschluss und ihrem Source-Anschluss zwischen der Leseelektrode ($i_{11}$ bis $i_{1N}$) jeder Stufe des Schieberegisters zur Ladungsübertragung und dem Bezugspotential ($V_R$) liegen, wobei die Transistoren durch die Signale gesteuert werden, die aus den mit einem der Register mit Digitalausgängen (4) verbundenen Speichern (m) kommen.

4. Korrelator nach einem der Ansprüche 2 oder 3, dadurch gekennzeichnet, dass die Mittel zum Multiplizieren mit +1 oder –1 (3) durch eine vierte Gruppe von MOS-Transistoren mit ihrem Drain- und ihrem Source-Anschluss in Reihe mit den MOS-Transistoren der ersten Gruppe dargestellt sind, wobei ihre Gate-Anschlüsse durch die Signale ($U_1$, $U_1$, $U_2$, $U_2$, ...) die aus mit einem der Register mit digitalen Ausgängen (5) verbundenen Speichern (M) kommen, gesteuert werden.

5. Korrelator nach Anspruch 4, dadurch gekennzeichnet, dass MOS-Transistoren mit Doppel-Gate ($Q_{21}$ bis $Q_{2N}$ und $Q_{31}$ bis $Q_{3N}$) jeden MOS-Transistor der ersten Gruppe in Reihe mit einem MOS-Transistor der vierten Gruppe ersetzen.

6. Korrelator nach einem der Ansprüche 2 bis 5, dadurch gekennzeichnet, dass
- das Register zur Ladungsübertragung, das das Eingangssignal erhält, einphasig arbeitet, dass es also aus einer Übertragungselektrode ($e_T$) und aus einer Speicherelektrode ($e_S$) gebildete Paare umfasst, wobei jedes zweite Paar ein Taktsignal ($\emptyset$) erhält, während in den dazwischenliegenden Paaren die Speicherelektrode, die Leseelektrode ($e_L$) genannt wird, über die Leseleitung angeschlossen und die Übertragungselektrode ($e_T$) an eine erste Bezugsspannung ($V_\emptyset/2$) angeschlossen ist;
- die MOS-Transistoren der zweiten Gruppe ($Q_{11}$ bis $Q_{1N}$) an ihren Gate-Anschlüssen das Taktsignal ($\emptyset$) erhalten;
- die MOS-Transistoren der ersten Gruppe ($Q_{21}$ bis $Q_{2N}$ und $Q_{31}$ bis $Q_{3N}$) an ihren Gate-Anschlüssen eine zweite Bezugsspannung ($V_0$) und die Bezugsspannungen ($V_R$, $V_\emptyset/2$) erhalten, wobei die Amplitude des Taktsignals ($V_\emptyset$) und die Schwellenspannung ($V_T$) der MOS-Transistoren der ersten Gruppe so gewählt sind, dass die Transistoren der zweiten Gruppe vor dem Eintreffen der Ladungen oder die Leseelektroden ($e_{L1}$) gesperrt sind.

7. Korrelator nach einem der Ansprüche 1 bis 6, dadurch gekennzeichnet, dass die programmierbaren Register mit digitalen Ausgängen (4, 5) Ladungsübertragungsregister sind.

8. Korrelator nach einem der Ansprüche 1 bis 6, dadurch gekennzeichnet, dass die programmierbaren Register mit digitalen Ausgängen (4 und 5) durch MOS-Transistoren gebildet sind.

9. Korrelator nach einem der Ansprüche 1 bis 8, dadurch gekennzeichnet, dass jeder an einen der Ausgänge eines programmierbaren Schieberegisters mit digitalen Ausgängen angeschlossene Speicher (m, M) umfasst
- einen Kondensator ($C_D$);
- einen ersten und einen zweiten Inverter in Reihe, wobei der Eingang (D) des ersten Inverters mit einem der Anschlüsse des Kondensators ($C_D$), dessen anderer Anschluss an Masse liegt, angeschlossen ist, der Ausgang des ersten und des zweiten Inverters (U und U) zwei komplementäre Ausgänge des Speichers umfasst, der Eingang (D) des ersten Inverters eine hohe Impedanz und der Ausgang (U) des zweiten Inverters eine niedrige Impedanz aufweist, der Ausgang des zweiten Inverters zwei stabile Lagen einnehmen kann und die Kennlinie (b) der beiden Inverter in Serie eine Verstärkung grösser als 1 in der Übergangszone zwischen den beiden stabilen Lagen aufweist;
- einen MOS-Transistor ($T_6$), der mit seinem Drain-Anschluss und seinem Source-Anschluss zwischen einer Bezugsspannung ($V_I$) und dem Kondensator ($C_D$) liegt und der an seinem Gate-Anschluss ein Taktsignal ($\emptyset_I$) erhält, das den Transistor während einer ersten Zeit wieder leitend steuert, so dass er einen in einer ersten Zone der Kennlinie $V_S$ ($V_E$) der beiden Inverter liegenden Arbeitspunkt (I) hat, wo $V_S/V_E$ –1 ein erstes Vorzeichen aufweist, und das den Transistor ausserhalb der ersten Zeit sperrt;
- Schaltmittel (G, $\emptyset$p), um während einer zweiten Zeit am Eingang (D) der beiden Inverter einen Ausgang eines programmierbaren Schieberegisters mit digitalen Ausgängen (4, 5) anzulegen, um, je nachdem ob dieser Ausgang 0 oder 1 ist, der Arbeitspunkt in einer zweiten Zone der Kennlinie $V_S$ ($V_E$) (b) der beiden Inverter (K) einzustellen oder ihn in der ersten Zone (I) zu halten;
- einen MOS-Transistor ($T_5$), der mit seinem Drain-Anschluss und seinem Source-Anschluss zwischen dem Eingang (D) und dem Ausgang (U) der beiden Inverter in Serie liegt und an seinem Gate-Anschluss ($\emptyset_L$) ein Steuersignal erhält, das ihn während einer dritten Zeit leitend steuert, wobei der Ausgang der beiden Inverter sich in der stabilen Lage der Kennlinie $V_S$ ($V_E$) entsprechend der zweiten (B) oder der ersten (H) Zone befindet, je nachdem, ob der Registerausgang 0 oder 1 ist.

10. Korrelator nach Anspruch 9, dadurch gekennzeichnet, dass der Kondensator ($C_D$) durch die Streukapazität der Drain- und Source-Diffundierungen der beiden MOS-Transistoren $T_5$ und $T_6$ gebildet ist.

11. Korrelator nach einem der Ansprüche 9 oder 10, dadurch gekennzeichnet, dass der Ausgang und der komplementäre Ausgang (U, U) jedes Speichers (M) die Gate-Anschlüsse der beiden MOS-Transistoren der vierten Gruppe ($Q_{21}$ und $Q_{31}$) steuert, die einen Teil der Mittel zum Multiplizieren mit +1 oder –1 bilden und die auf den beiden parallelen Lesepfaden an der gleichen Leseelektrode liegen.

**Claims**

1. Analog/digital correlator with programmable coefficients of values +1, –1 or 0, characterized in that it comprises

- a charge transfer shift register (1) receiving samples of the analog input signal (E) to be correlated;

- means (2) for suppressing the signal taken from the output of each stage of the analog register (1) and constituted by at least one electronic switch ($i_{11}$ to $i_{1N}$) connected between the output of each stage of the analog register (1) and a reference potential ($V_R$) and blocking the reading of the charges by applying the reference potential to the output of the stage;

- multiplication means (3) for multiplying by +1 or –1 the output signal of each stage of the analog register (1) which has not been suppressed by the suppressing means (2), said means (3) for multiplying by +1 or –1 being constituted by two parallel charge read paths (V+, V–), each including at least one electronic switch ($i_{21}$ to $i_{2N}$ and $i_{31}$ to $i_{3N}$);

- two shift registers (4, 5) with programmable digital outputs of values 0 or 1, one (4) controlling the suppressing means (2) and the other (5) the multiplication means (3), the blocking of the reading or the reading on one of the two paths being controlled by said two digital registers (4, 5) connected to the switches by way of memories (m and M) and the switches of the multiplication means (3) which belong to the two paths (V+ and V–) being controlled by complementary signals;

- means (6) for algebraic summation of the output signals of the multiplication means and means (7) for reading the charges so as to obtain an electrical signal (S) at the output of the correlator, said summation means and reading means comprising a differential amplifier (8), one of the read paths (V+) being connected to the positive input of the differential amplifier (8) and the other (V–) to the negative input of said amplifier (8).

2. Correlator according to claim 1, characterized in that the read means are constituted by:

- a first group of MOS transistors ($Q_{21}$ to $Q_{2N}$ and $Q_{31}$ to $Q_{3N}$) connected on each read path (V+, V–) on the one hand to the read electrode of each stage of the analog register (1) and on the other hand to one of the inputs of the differential amplifier (8);

- a capacitor ($C_1$, $C_2$) connected between each input of the differential amplifier (8) and ground;

- a control circuit ($Q_1$, $Q_2$) connected to each of the inputs of the differential amplifier (8) which ensures the charging of the capacitor ($C_1$, $C_2$) and the bringing to a saturated state of the MOS transistors of the first group before the arrival of the charges to be read on the read elctrodes ($e_L$), the potential of the capacitor being allowed to float at the time of arrival of the charges;

- a second group of MOS transistors ($Q_{11}$ to $Q_{1N}$) connected between the read electrode of each stage of the analog register (1) and a reference potential ($V_R$), said transistors blocking the reading during the intervals when charge quantities ($Q_S$) to be read are not disposed on the read electrodes ($e_{L1}$).

3. Correlator according to claim 2, characterized in that the suppressing means are constituted by a third group of MOS transistors connected by their drain and their source between the read electrode ($i_{11}$ to $i_{1N}$) of each stage of the charge transfer shift register and the reference potential ($V_R$), said transistors being controlled by the signals emitted by the memories (m) connected to one of the digital output registers (4).

4. Correlator according to one of claims 2 or 3, characterized in that the means (3) for multiplying by +1 or –1 are constituted by a fourth group of MOS transistors in series via their drain and their source with the MOS transistors of the first group, the gates of which are controlled by the signals ($U_1$, $\overline{U_1}$, $U_2$, $\overline{U_2}$, ...) emitted by the memory (M) connected to one of the digital output registers (5).

5. Correlator according to claim 4, characterized in that double gate MOS transistors ($Q_{21}$ to $Q_{2N}$ and $Q_{31}$ to $Q_{3N}$) replace each MOS transistor of the first group in series with a MOS transistor of the fourth group.

6. Correlator according to one of claims 2 to 5, characterized in that

- the charge transfer register which receives the input signal operates in monophase, i.e. it comprises pairs constituted by a transfer electrode ($e_T$) and a storage electrode ($e_S$), one pair in two receiving a clock signal ($\varnothing$) whereas in the intermediate pairs the storage electrode referred to as read electrode ($e_L$) is connected to the read means and the transfer electrode ($e_T$) is connected to a first reference potential ($V_\varnothing/2$);

- the MOS transistors of the second group ($Q_{11}$ to $Q_{1N}$) receive said clock signal ($\varnothing$) at their gates;

- the MOS transistors of the first group ($Q_{31}$ to $Q_{2N}$ and $Q_{31}$ to $Q_{3N}$) receive at their gates a second reference potential ($V_0$) and the reference potentials ($V_R$, $V_\varnothing/2$), the amplitude of the clock signal ($V_\varnothing$) and the threshold voltage ($V_T$) of the MOS transistors of the first group being chosen so that the transistors of the second group are blocked before the arrival of the charges or the read electrodes ($e_{L1}$).

7. Correlator according to one of claims 1 to 6, characterized in that the programmable registers (4, 5) with digital outputs are charge transfer registers.

8. Correlator according to one of claims 1 to 6, characterized in that the programmable registers (4 and 5) with digital outputs are constituted by MOS transistors.

9. Correlator according to one of claims 1 to 8, characterized in that each memory (m, M) connected to one of the outputs of a programmable shift register with digital outputs comprises

- a capacitor ($C_D$);

- a first and a second inverter in series, the input (D) of the first inverter being connected to one of the terminals of the capacitor ($C_D$) whose other terminal is connected to ground, the output of the first and of the second inverter (U and $\overline{U}$) constituting two complementary outputs of the memory, the input (D) of the first inverter being of high impedance and the output (U) of the second inverter being of low impedance, the output of the second inverter being able to assume two stable states and the response curve (b) of said two inverters in series having a gain greater than 1 in the transition zone between the two stable states;

- a MOS transistor ($T_6$) connected via its drain and its source between a reference potential ($V_I$) and the capacitor ($C_D$) and receiving at its gate a clock signal ($\varnothing_I$) which renders said transistor conductive during a first time so as to have a function point (J) situtated in a first zone of the response curve $V_S$ ($V_E$) of the two inverters where $V_S/V_E$ –1 has a first sign, and which blocks said transistor outside said first time;

- means (G, $\varnothing_D$) for applying during a second time to the input (D) of the two inverters an output of a programmable shift register (4, 5) with digital outputs for bringing the function point, depending on whether said output is 0 or 1, into a second zone of the curve response $V_S$ ($V_E$) (b) of the two inverters (K) or for maintaining it in the first zone (J);

- a MOS transistor ($T_5$) via its drain and its source between the input (D) and the output (U) of the two inverters in series and receiving at its gate ($\varnothing_L$) a control signal which renders it conductive during a third time, the output of the two inverters being disposed in the stable state of the response curve $V_S$ ($V_E$) corresponding to the second (B) or the first (H) zone depending on whether the register output is 0 or 1.

10. Correlator according to claim 9, characterized in that the capacitor ($C_D$) is constituted by the parasitic capacitance of the drain and source diffusions of the two MOS transistors $T_5$ and $T_6$.

11. Correlator according to one of claims 9 or 10, characterized in that the output and the complementary output (U, U) of each memory (M) controls the gates of the two MOS transistors of the fourth group ($Q_{21}$ and $Q_{31}$) forming part of the means for multiplication by +1 or –1, and situated on two read paths in parallel of the same read electrode.

# FIG_1

# FIG_2

# FIG_3

FIG_4

(a)

$R_1=0$   $u_1=0$   $V_0$   $C_1$

$V_R$   $i_{11}$   $Q_{31}$   A+

$V.\phi/2$   $\phi$   B   $\bar{u}_1=1$   $V_0$   $C_2$   $\phi$   V

1   $\phi$   $V_R$   $C_2$   A-

$e_T$   $e_S$   $e_T$   $e_{L1}$   $e_T$   $e_S$   9   $D_1$   $Q_{11}$   $D_2$   $g_1$   $Q_{21}$   $g_2$   $D_3$   $Q_2$   $D_4$

(b)

$V\phi/2-V_T$   $Q_S$

$V_R$   $V_0-V_T=V\phi/2$

$V\phi-V_T$   V

$V\phi-V_T$

(c)

$Q_S$

$V_R$   $\phi$   $V\phi/2$

0 094 265

FIG_5

FIG_6

FIG_7